# FASCICULE DE BREVET EUROPEEN

(11) **EP 0 538 110 B1**
(45) Date de publication et mention de la délivrance du brevet: **18.12.1996**
(21) Numéro de dépôt: 92402782.4
(22) Date de dépôt: 12.10.1992
(51) Int. Cl.: G10K 11/26, G01N 29/22, G01N 29/24

(54) **Appareil de contrôle non destructif, par ultrasons, de matériaux tels que des matériaux composites, et procédé correspondant**
Verfahren und Vorrichtung zur Ultraschallprüfung von Verbundmaterialien
Ultrasonic apparatus for testing composite materials and corresponding method

(30) Priorité: 14.10.1991 FR 9112614
(43) Date de publication de la demande: 21.04.1993
(73) Titulaire: AEROSPATIALE Société Nationale Industrielle, 75781 Paris Cédex 16 (FR)
(72) Inventeur: de Belleval, Jean François, F-60153 Rethondes (FR); Bardouillet, Pascal, F-71640 Givry (FR); Blondet, Pascal, F-92400 Courbevoie (FR); Ribeiro, Helder Manuel Monteiro, F-60200 Compiegne (FR); Lecomte, Jean Claude, F-38000 Grenoble (FR); Arnaud, Jean Louis, F-91370 Verrieres le Buisson (FR)
(74) Mandataire: Poulin, Gérard

(56) Documents cités:
- GB-A- 2 016 143
- US-A- 4 328 569
- US-A- 4 537 074
- US-A- 4 712 428

## Description

L'invention concerne un appareil de contrôle non destructif, par ultrasons, conçu pour la recherche de défauts dans des matériaux solides ou liquides pouvant comporter plusieurs phases réparties les unes dans les autres de façon acceptable, tels que des matériaux composites présentant une porosité répartie, et dont l'épaisseur peut atteindre 50 mm, ou plus. L'invention concerne également le procédé de contrôle non destructif mis en oeuvre par cet appareil.

Les capteurs ultrasonores sont utilisés couramment pour effectuer le contrôle non destructif des pièces métalliques ainsi que des pièces en matériau composite de faible épaisseur (environ 25 mm au plus).

Pour effectuer ces contrôles, on a généralement recours à un détecteur unique ou à un groupe de détecteurs dont chacun fonctionne isolément. Chaque détecteur est alors orienté perpendiculairement à la surface de la pièce et remplit à la fois les fonctions d'émetteur et de récepteur.

Comme l'illustre notamment le document US-A-4 305 297, on connaît aussi des appareils de contrôle ultrasonores plus complexes regroupant plusieurs détecteurs inclinés par rapport à la surface de la pièce, de façon à présenter une incidence non nulle. Dans ce cas, les détecteurs sont regroupés par paire, les détecteurs d'une même paire émettant deux faisceaux ultrasonores parallèles. Ces détecteurs sont associés à des circuits électroniques complexes qui les font fonctionner successivement selon différents modes rendant chacun d'entre eux successivement émetteur et récepteur.

Par rapport aux capteurs ultrasonores fonctionnant isolément les uns des autres, ces appareils de contrôle ultrasonores ont pour avantage de permettre la détection de défauts s'étendant perpendiculairement à la surface de la pièce et aussi, éventuellement, de localiser ces défauts. Cependant, ils nécessitent l'utilisation de circuits électroniques complexes pour assurer le dépouillement des signaux fournis par les capteurs dans leurs différents modes de fonctionnement.

Par ailleurs, aucun de ces deux types d'appareils de contrôle ultrasonores connus ne permet de détecter, de localiser et de dimensionner des défauts dans des pièces relativement épaisses (par exemple, entre 25 mm et 50 mm) et présentant une porosité répartie de façon sensiblement uniforme dans tout son volume, comme c'est notamment le cas pour des pièces épaisses en matériau composite. En effet, cette porosité, en elle-même acceptable, se traduit dans les signaux de sortie des capteurs ultrasonores fonctionnant en récepteur par une forte atténuation formant un bruit de fond qui rend les défauts, tels que des délaminages entre couches dans les matériaux composites, pratiquement indécelables.

L'invention a précisément pour objet un nouvel appareil de contrôle ultrasonore dont la conception originale lui permet de faire disparaître ou, au moins, de réduire très sensiblement l'atténuation provoquée dans les appareils existants par le caractère poreux de la pièce, de telle sorte qu'il devient possible de détecter, de localiser et de dimensionner des défauts dans des pièces épaisses présentant une porosité répartie.

Selon l'invention, ce résultat est obtenu au moyen d'un appareil de contrôle non destructif de matériaux pouvant présenter plusieurs phases réparties, caractérisé par le fait qu'il comprend :
- une tête de contrôle ultrasonore portant au moins une paire de capteurs ultrasonores aptes à émettre des faisceaux ultrasonores, les capteurs d'une même paire étant placés en vis-à-vis l'un de l'autre, en des emplacements diamétralement opposés sur un cercle, et orientés de telle sorte que les axes longitudinaux de chacun des capteurs se coupent tous en un même point, l'angle formé entre l'axe de chacun des capteurs et l'axe de la tête de contrôle ayant une même valeur ;
- des moyens pour déplacer la tête de contrôle en face d'une surface du matériau à contrôler, de telle sorte que tous les faisceaux ultrasonores présentent toujours sensiblement une même incidence par rapport à cette surface et que ledit point soit toujours placé à l'intérieur du matériau ;
- des moyens pour rendre tous les capteurs ultrasonores simultanément émetteurs, puis récepteurs, de telle sorte que chacun des capteurs délivre simultanément un signal de sortie représentatif d'une onde ultrasonore réfléchie par le matériau, à partir des faisceaux ultrasonores précédemment émis par les capteurs ;
- des moyens de regroupement de tous les signaux de sortie, délivrant un signal de contrôle dans lequel un écho distinct des surfaces du matériau représente un défaut.

D'une manière classique lorsqu'on effectue un contrôle ultrasonore, ce contrôle s'effectue sous eau, c'est-à-dire que la tête de contrôle ainsi que la pièce sont placées dans l'eau. L'incidence des faisceaux sur la pièce, c'est-à-dire leur inclinaison par rapport à la normale à la pièce, est déterminée par compromis, afin que l'énergie transmise dans le matériau soit maximale (minimum de réflexion à l'interface) et que le parcours ultrasonore du mode de propagation des faisceaux dans le matériau soit minimal.

Par ailleurs, les capteurs sont de préférence tous identiques et émettent des faisceaux ultrasonores à large bande, dont la fréquence centrale est d'environ 1,5 MHz.

Dans un mode de réalisation préféré de l'invention, Les moyens de regroupement des différents signaux de sortie délivrés par les capteurs sont des moyens de sommation.

Bien que l'appareil selon l'invention puisse être utilisé pour contrôler des pièces de natures diverses, il est particulièrement adapté au contrôle de pièces en matériau composite, comprenant des nappes de fibres unidirectionnelles superposées de façon croisée, de telle sorte que les fibres des différentes nappes sont orientées selon quatre directions décalées d'environ 45° les unes par rapport aux autres. Dans ce cas, la tête de contrôle porte de préférence quatre paires de capteurs ultrasonores, placés en vis-à-vis tous les 45° sur un même cercle.

L'invention a aussi pour objet un procédé de contrôle non destructif de matériaux pouvant présenter plusieurs phases réparties, caractérisé par le fait qu'il consiste à :
a) placer en face d'une surface du matériau à contrôler une tête de contrôle ultrasonore portant au moins une paire de capteurs ultrasonores aptes à émettre des faisceaux ultrasonores dans des directions qui se croisent toutes en un même point situé à l'intérieur du matériau, de telle sorte que tous ces faisceaux présentent sensiblement une même incidence par rapport à la surface ;
b) faire émettre des faisceaux ultrasonores simultanément par tous les capteurs ;
c) rendre simultanément tous les capteurs récepteurs, afin que chacun d'entre eux délivre simultanément un signal de sortie représentatif d'une onde ultrasonore réfléchie par le matériau, à partir des faisceaux ultrasonores précédemment émis par les capteurs ;
d) regrouper tous les signaux de sortie afin d'obtenir un signal de contrôle dans lequel un écho distinct des surfaces du matériau représente un défaut ;
e) renouveler les opérations b) à d) autant de fois que nécessaire, tout en déplaçant la tête de contrôle ultrasonore par rapport au matériau, afin d'effectuer un balayage de cette dernière.

De préférence, on déplace la tête de contrôle ultrasonore en maintenant la distance séparant cette tête du matériau sensiblement constante, afin d'établir une cartographie des défauts à une profondeur donnée.

Avantageusement, on renouvelle alors les opérations a) à e) pour différentes valeurs de la distance séparant la tête de contrôle ultrasonore du matériau, afin d'établir une cartographie des défauts à différentes profondeurs.

On décrira maintenant, à titre d'exemple non limitatif, un mode de réalisation préféré de l'invention, en se référant aux dessins annexés, dans lesquels :
- la figure 1 est une vue de face, représentant schématiquement, en coupe verticale, la tête de contrôle utilisée dans l'appareil selon l'invention, lors du contrôle d'une pièce épaisse réalisée par exemple en matériau composite ;
- la figure 2 est une vue de dessus de la tête de contrôle de la figure 1 ;
- la figure 3 est un diagramme représentant schématiquement l'ensemble de l'appareil de contrôle selon l'invention, incorporant la tête de contrôle des figures 1 et 2 ;
- la figure 4 représente deux des signaux de sortie délivrés par les capteurs ainsi que le signal de contrôle obtenu par la sommation des différents signaux de sortie ;
- la figure 5 est une vue comparable à la figure 4, illustrant le cas où un retard Δt existe entre les signaux de sortie délivrés par les capteurs ; et
- la figure 6 est une vue comparable à la figure 5, illustrant le cas où le matériau contrôlé est anisotrope.

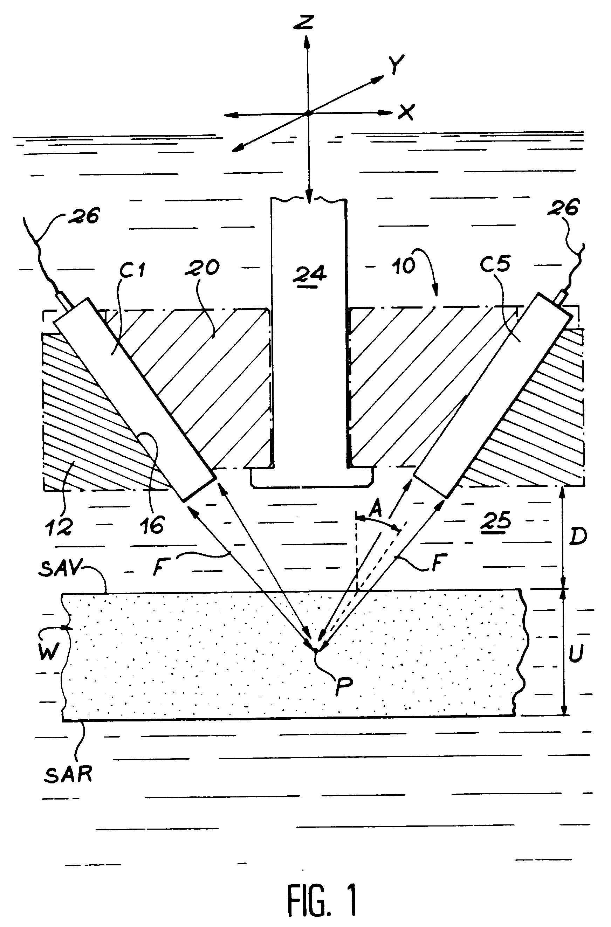

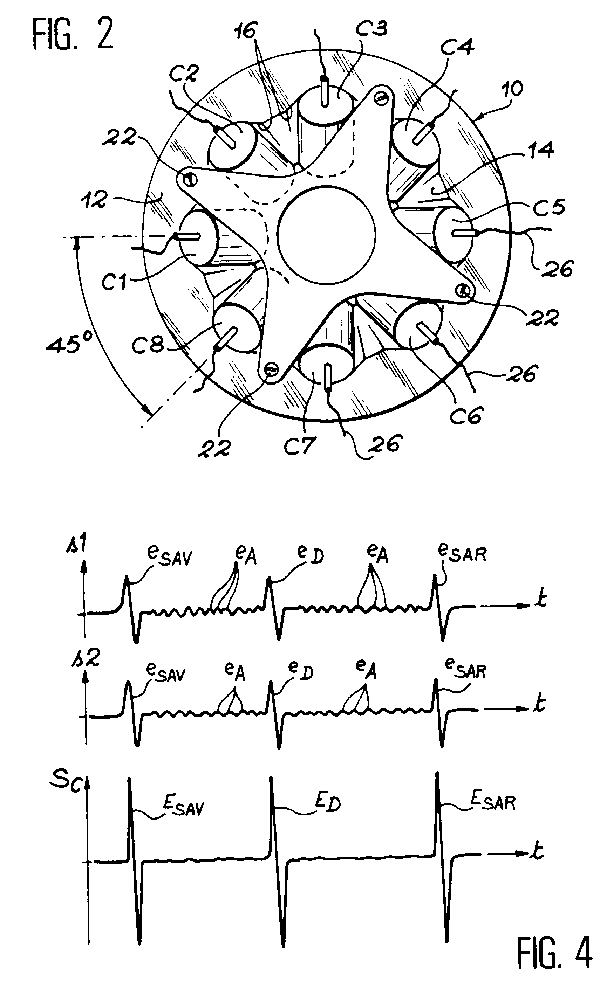

Comme l'illustrent principalement les figures 1 et 2, l'appareil de contrôle ultrasonore comprend une tête de contrôle ultrasonore, désignée de façon générale par la référence 10. Cette tête de contrôle 10 comporte un corps annulaire 12 pourvu d'un évidement central 14, généralement tronconique, formant des empreintes 16, régulièrement espacées, dans lesquelles sont fixés des capteurs ultrasonores C1 à C8.

Les capteurs ultrasonores C1 à C8, tous identiques, sont des capteurs à large bande, d'une fréquence centrale d'environ 1,5 MHz, émettant un faisceau ultrasonore pseudo-focalisé, ayant une distance pseudo-focale sensiblement indépendante de la fréquence. Il s'agit de capteurs plans d'un diamètre d'environ 20 mm.

Dans l'exemple de réalisation représenté, les empreintes 16 ainsi que les capteurs ultrasonores C1 à C8 sont au nombre de huit et répartis régulièrement à 45° les uns des autres selon un cercle, comme l'illustre plus précisément la figure 2. En d'autres termes, la tête de contrôle 10 supporte quatre paires de capteurs ultrasonores C1, C5 ; C2, C6 ; C3, C7 et C4, C8, les capteurs d'une même paire étant disposés en vis-à-vis l'un de l'autre, c'est-à-dire en des emplacements diamétralement opposés sur le cercle le long duquel ces capteurs sont répartis.

Par ailleurs, les empreintes 16, dans lesquelles sont fixés les capteurs ultrasonores C1 à C8, sont orientées de telle sorte que les axes longitudinaux de chacun des capteurs se coupent tous en un même point, repéré par la lettre P sur la figure 1. Ce point P, qui constitue un point de focalisation des différents faisceaux ultrasonores F émis par chacun des capteurs C1 à C8, est placé sur l'axe de la tête de contrôle 10, qui coïncide avec l'axe de la pièce annulaire 12. Comme l'illustre la figure 1, lorsque la tête de contrôle ultrasonore 10 est placée en vis-à-vis d'une pièce W à contrôler, son axe est orienté perpendiculairement à la surface avant SAV en vis-à-vis de cette pièce.

Par ailleurs, la forme donnée aux empreintes 16, dans lesquelles sont logés les capteurs ultrasonores C1 à C8, a pour effet de donner à l'angle A formé entre l'axe de chacun des capteurs et l'axe de la tête de contrôle 10 une même valeur.

Etant donné que la tête de contrôle ultrasonore 10 est utilisée avec son axe orienté perpendiculairement à la surface avant SAV de la pièce W, l'angle A correspond à l'angle d'incidence de chacun des faisceaux F émis par les capteurs C1 à C8, par rapport à cette surface SAV de la pièce W. Dans le mode de réalisation illustré sur les figures, cet angle A est fixé une fois pour toutes par la forme des empreintes 16.

Pour déterminer l'angle d'incidence A, on tient compte de la réfraction à l'interface eau-matériau et du changement de mode des ultrasons lorsqu'ils franchissent cette interface. Ainsi, dans l'eau on n'a que des ondes de compression (ondes longitudinales). De ce fait, l'incidence A du faisceau dans l'eau n'est pas forcément la même que dans le matériau. L'incidence A des palpeurs dans le liquide de couplage est déterminée de façon à avoir le maximum d'énergie transmise dans le matériau (minimum de réflexion à l'interface) et le minimum de parcours ultrasonore du mode de propagation produit dans le matériau (prise en compte de l'atténuation). Ce compromis est obtenu de façon théorique et/ou expérimentale,.cas par cas, pour chaque matériau.

Dans le cas des matériaux composites réalisés par nappes successives croisées, il est difficile de définir une vitesse de propagation des ultrasons dans les matériaux car celle-ci dépend de l'orientation du faisceau par rapport aux nappes d'une part et des différents modes de propagation entre la matrice de résine homogène et les fibres faisant guide d'onde d'autre part.

Des essais effectués sur un matériau composite particulier ont conduit à retenir une incidence A de 45° des ondes longitudinales dans l'eau, car cette incidence correspondait, dans ce cas particulier, à une incidence de 45° des ondes transversales dans le matériau.

D'autres essais, qui ont donné de très bons résultats, ont conduit à créer des ondes transversales d'incidence 25° dans le matériau composite, afin de diminuer le parcours ultrasonore dans ce matériau.

Dans une variante de réalisation (non représentée), la pièce annulaire 12 peut présenter plusieurs séries d'empreintes, aussi bien sur sa surface extérieure qu'à l'intérieur de l'évidement 14, ce qui permet de donner à l'angle A des valeurs différentes.

Dans une autre variante de réalisation non représentée, la tête de contrôle ultrasonore 10 peut être équipée de moyens de réglage permettant d'orienter à volonté tous les capteurs ultrasonores C1 à C8 selon un même angle A, réglable entre des valeurs extrêmes prédéterminées.

Dans le mode de réalisation illustré sur les figures 1 et 2, le blocage des capteurs ultrasonores C1 à C8 dans les empreintes 16 est assuré par une pièce centrale 20, en forme d'étoile, fixée sur la face supérieure de la pièce annulaire 12 par exemple au moyen de vis 22 (figure 2). Bien entendu, un autre type de fixation pourrait être envisagé, le blocage des capteurs C1 à C8 pouvant notamment être assuré par des colliers fixés dans l'évidement 14.

Comme l'illustre très schématiquement la figure 1, la pièce centrale 20 de la tête de contrôle ultrasonore 10 est montée sur un porteur 24 équipé de moyens (non représentés) pour commander un déplacement de la tête de contrôle 10 parallèlement à la surface avant SAV de la pièce W, comme l'indiquent les flèches X et Y sur la figure 1. Cela permet d'effectuer un balayage de toute la surface avant SAV de la pièce W, à une profondeur donnée. Bien entendu, dans le cas où la surface SAV n'est pas plane, les déplacements de la tête de contrôle 10 sont alors plus complexes que ceux illustrés par les flèches X et Y sur la figure 1. Ces déplacements peuvent notamment être obtenus au moyen d'un ou plusieurs palpeurs, maintenus en contact avec la surface SAV de la pièce W, et réglables en hauteur.

Le porteur 24 est également équipé de moyens permettant de faire varier la distance séparant la tête de contrôle 10 de la surface SAV de la pièce W. Ces moyens (non représentés) sont illustrés schématiquement par la flèche Z sur la figure 1.

De la même manière que pour les appareils de contrôle ultrasonores connus, la tête de contrôle 10 ainsi que la pièce W à contrôler sont placées dans l'eau 25, afin notamment que l'espace séparant chacun des capteurs C1 à C8 de la surface SAV de la pièce soit rempli d'eau.

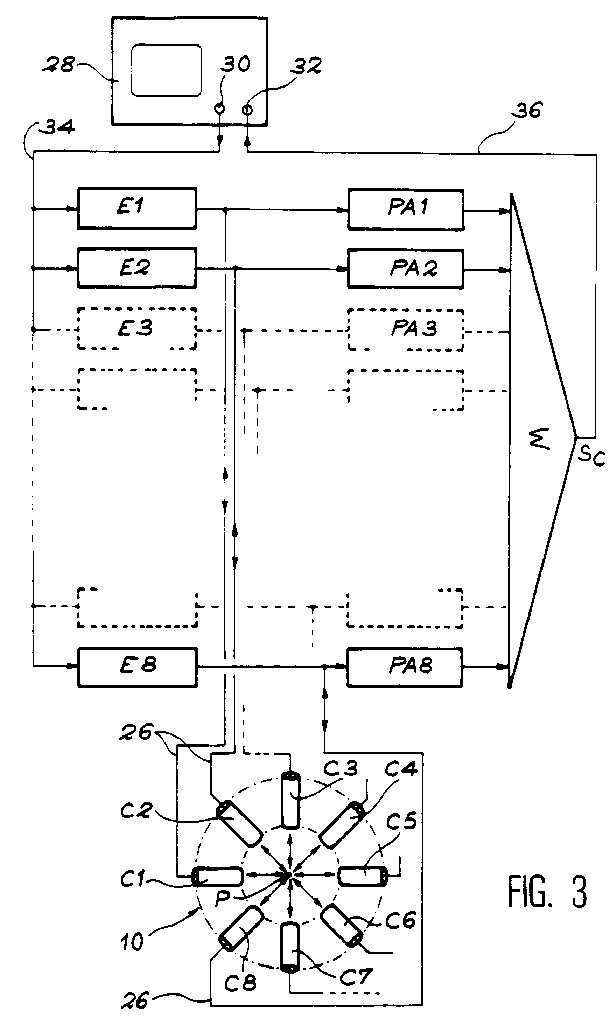

Conformément à l'invention et comme l'illustre plus précisément la figure 3, l'appareil de contrôle ultrasonore selon l'invention comprend également un ensemble électronique relié électriquement à chacun des capteurs ultrasonores C1 à C8 par des conducteurs électriques 26.

Cet ensemble électronique comprend principalement un appareil de contrôle ultrasonore 28, conçu pour rendre tous les capteurs ultrasonores C1 à C8 simultanément émetteurs, puis récepteurs. Cet appareil de contrôle ultrasonore 28 comporte une borne émettrice 30 et une borne réceptrice 32.

La borne émettrice 30 est reliée par des conducteurs 34 à huit émetteurs, référencés E1 à E8 sur la figure 3, chacun de ces émetteurs étant relié électriquement à l'un des capteurs C1 à C8 respectivement par l'un des conducteurs 26. De cette manière, lorsqu'un signal d'émission est délivré par l'appareil de contrôle ultrasonore 28 à sa borne 30, chacun des émetteurs E1 à E8 délivre de façon synchronisée un signal de commande assurant l'émission simultanée par chacun des capteurs ultrasonores C1 à C8 d'un faisceau ultrasonore F. Les durées de fonctionnement en modes d'émission, puis de réception, sont déterminées en fonction de l'épaisseur U de la pièce W et de la distance D séparant la tête de contrôle ultrasonore 10 de cette pièce, afin que chacun des capteurs C1 à C8 soit passé dans l'état récepteur lorsque les premiers échos en provenance de la pièce leur parviennent.

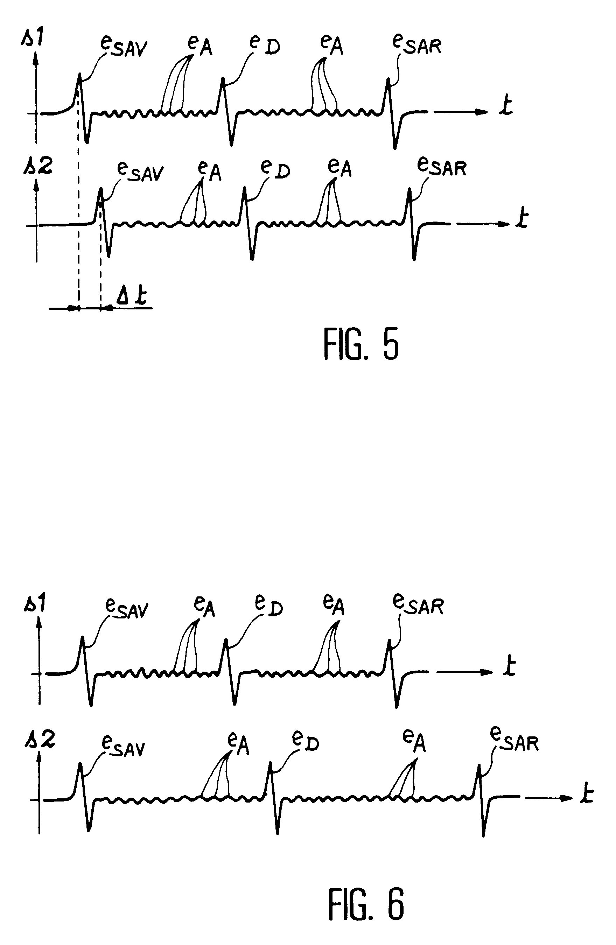

Lorsqu'il reçoit une onde ultrasonore réfléchie par la pièce, chacun des capteurs C1 à C8 délivre un signal de sortie représentatif de cette onde ultrasonore. L'allure des signaux de sortie s1 et s2 délivrés en fonction du temps t par les capteurs ultrasonores C1 et C2 est représentée sur la figure 4, dans le cas où le point de focalisation P des différents capteurs coïncide avec un défaut de la pièce, tel qu'un délaminage entre deux couches dans un matériau composite. L'écho correspondant apparaît en e_{D} sur la figure 4, alors que les échos e_{sAV} et e_{sAR} correspondent respectivement à la réflexion des ondes ultrasonores sur la surface avant SAV de la pièce W et sur sa surface arrière SAR. Entre les échos e_{sAV}, e_{D} et e_{sAR}, chacun des signaux s1 et s2 présente des échos aléatoires e_{A} résultant de la porosité du matériau constituant la pièce.

Bien que les signaux de sortie des autres capteurs C3 à C8 ne soient pas représentés sur la figure 4, on comprend que ces signaux ont sensiblement la même allure que les signaux s1 et s2.

Comme l'illustre la figure 3, chacun de ces signaux de sortie est acheminé par les conducteurs électriques 26 à un circuit sommateur Σ, au travers de préamplificateurs repérés par les références PA1 à PA8 sur la figure 3.

Comme l'illustre bien la figure 4, le circuit sommateur Σ a pour effet d'additionner chacun des signaux de sortie, tels que les signaux s1 et s2, des capteurs ultrasonores C1 à C8. Cela se traduit, pour le signal de contrôle S_{C} délivré par ce circuit sommateur Σ, par une amplification des échos E_{sAV} et E_{sAR} correspondant à la réflexion des ondes ultrasonores sur les deux surfaces opposées de la pièce et des échos éventuels E_{D} correspondant à des défauts de structure importants de cette pièce, du type délaminage dans le cas d'un matériau composite. En effet, compte tenu du synchronisme des faisceaux ultrasonores émis par chacun des capteurs et du caractère parfaitement symétrique de ces faisceaux qui sont focalisés au point P, les différents échos e_{D} s'ajoutent lorsqu'un défaut se trouve en ce point, comme on l'a envisagé par hypothèse.

En revanche, les différents échos de moindre amplitude e_{A} présentés par chacun des signaux de sortie s1, s2, etc. des capteurs entre les échos e_{sAV}, e_{D} et e_{sAR} ont tendance à s'annuler lors de l'addition de ces signaux de sortie, en raison du caractère aléatoire de la répartition de la porosité à l'intérieur de la pièce. Par conséquent, un effet de moyennage se produit qui tend au contraire à amoindrir les fluctuations du signal de contrôle S_{C} délivré par le circuit sommateur Σ, entre les échos amplifiés E_{sAV}, E_{D} et E_{sAR}.

Le signal S_{C} délivré par le circuit sommateur Σ est transmis à la borne de réception 32 de l'appareil de contrôle ultrasonore 28 par un conducteur électrique 36. Ce signal est mis en forme et traverse, à l'intérieur de l'appareil 28, un convertisseur tension/courant.

Dans le cas de la figure 4, on a supposé que la distance entre chacun des capteurs C1 à C8 et la pièce W étant la même et que le matériau constituant cette pièce était isotrope.

Comme l'illustre la figure 5, lorsque la distance entre chacun des capteurs C1 à C8 et la pièce W n'est pas la même, c'est-à-dire lorsque la tête de contrôle 10 est légèrement inclinée par rapport à la surface SAV de la pièce W, des retards Δt existent entre les signaux de sortie, tels que les signaux s1 et s2 des capteurs C1 à C8. Pour tenir compte de ce phénomène, on place avantageusement en amont du circuit sommateur Σ des moyens de compensation (électronique ou automatique) de chacun de ces retards.

Par ailleurs, lorsque le matériau contrôlé est anisotrope, les vitesses de propagation des faisceaux ultrasonores émis par les capteurs C1 à C8 dans ce matériau sont différentes, comme l'illustre la figure 6. Ce phénomène peut être compensé en plaçant en amont du circuit sommateur Σ des moyens d'ajustage de la base ou échelle de temps de chacun des signaux s1 à s8.

L'introduction de moyens de compensation de retard et de moyens d'ajustage de la base de temps dans le circuit électrique permet d'assurer une sommation cohérente des échos e_{sAV}, e_{D} et e_{sAR}, même si la tête de contrôle est légèrement inclinée et si le matériau contrôlé est anisotrope.

Etant donné que l'appareil de contrôle selon l'invention fournit essentiellement une information relative à la présence ou à l'absence d'un défaut inacceptable au point P de focalisation des différents capteurs C1 à C8, on conçoit aisément qu'une inspection globale de la pièce nécessite de déplacer la tête de contrôle ultrasonore 10 parallèlement à la surface avant SAV de la pièce, pour fournir une image représentative de l'état de celle-ci à la profondeur correspondant au point de focalisation P. De préférence, différents balayages de ce type sont réalisés successivement pour différentes valeurs de la distance séparant la tête de contrôle de la surface de la pièce, afin de fournir une image de celle-ci à différentes profondeurs.

Il est important de noter que les informations obtenues lors de tels balayages de la pièce peuvent être traitées de différentes manières, selon le type de contrôle que l'on désire effectuer. Ainsi, il est possible de retenir, selon le cas, soit les variations d'amplitude de l'écho de fond dans le signal de contrôle S_{C}, qui correspondent à l'atténuation et qui peuvent être illustrées par une variation de couleurs en fonction de l'amplitude, soit les variations d'amplitude de l'écho d'amplitude maximale réfléchi entre l'écho d'entrée E_{SAV} et l'écho de fond E_{SAR}, soit encore les variations de distance de l'écho d'amplitude maximale réfléchi entre l'écho d'entrée et l'écho de fond.

Dans tous les cas, il est essentiel d'observer que les informations obtenues à l'aide de l'appareil de contrôle selon l'invention permettent pratiquement d'éliminer tous les échos dus à la porosité de la pièce. Dans le cas de pièces poreuses relativement épaisses (25 à 50 mm) telles que des pièces en matériau composite, cela permet de détecter, localiser et dimensionner des défauts inacceptables qui se confondaient auparavant avec le bruit de fond produit par les échos dus à la porosité. Un contrôle non destructif de pièces de ce type, qui ne pouvait pratiquement pas être effectué jusqu'à présent, devient ainsi possible.

Il est clair cependant que l'appareil de contrôle non destructif selon l'invention n'est pas limité au contrôle de pièces épaisses et présentant une porosité répartie. En effet, cet appareil ainsi que le procédé de contrôle qui lui correspond permettent de détecter des défauts dans un matériau solide ou liquide comportant plusieurs phases et présentant des hétérogénéités constituées, par exemple, de fibres dans une matrice, de porosités, ou de structures métallurgiques particulières consécutives à des conditions de mise en forme et/ou de traitement telles que la solidification, le forgeage, etc...

Bien entendu, l'invention n'est pas limitée au mode de réalisation qui vient d'être décrit à titre d'exemple, mais en couvre toutes les variantes. Ainsi, la tête de contrôle qui a été décrite comporte quatre paires de capteurs agencés à 45° les unes des autres, ce qui permet un contrôle particulièrement efficace dans le cas de pièces en matériau composite formées de fibres unidirectionnelles superposées sous la forme de couches, de telle sorte que les fibres des différentes couches forment entre elles des angles voisins de 45°. En effet, cela permet d'orienter chaque paire de capteurs dans le sens d'une partie des fibres formant la pièce à contrôler, ce qui améliore la propagation des ondes ultrasonores dans la pièce et, par conséquent, l'efficacité du contrôle. Cependant, une disposition différente des capteurs peut être envisagée si la pièce à contrôler n'est pas réalisée en matériau composite ou, dans le cas d'une pièce en matériau composite, si les fibres ne sont pas orientées à 45° les unes des autres. De manière générale, la tête de contrôle ultrasonore peut donc comprendre une ou plusieurs paires de capteurs, selon le type de pièce à contrôler.

## Revendications

1. Appareil de contrôle non destructif de matériaux pouvant présenter plusieurs phases réparties, caractérisé par le fait qu'il comprend :
- une tête de contrôle ultrasonore (10) portant au moins une paire de capteurs ultrasonores (C1 à C8) aptes à émettre des faisceaux ultrasonores (F) les capteurs d'une même paire étant placés en vis-à-vis l'un de l'autre, en des emplacements diamétralement opposés sur un cercle, et orientés de telle sorte que les axes longitudinaux de chacun des capteurs se coupent tous en un même point (P), l'angle formé entre l'axe de cnacun des capteurs et l'axe de la tête de contrôle ayant une même valeur (A) ;
- des moyens (24) pour déplacer la tête de contrôle en face d'une surface du matériau à contrôler, de telle sorte que tous les faisceaux ultrasonores présentent toujours sensiblement une même incidence par rapport à cette surface et que ledit point soit toujours placé à l'intérieur du matériau ;
- des moyens (28) pour rendre tous les capteurs ultrasonores (C1 à C8) simultanément émetteurs, puis récepteurs, de telle sorte que chacun des capteurs délivre simultanément un signal de sortie (s1, s2, ...) représentatif d'une onde ultrasonore réfléchie par le matériau, à partir des faisceaux ultrasonores précédemment émis par les capteurs ;
- des moyens de regroupement (Σ) de tous les signaux de sortie, délivrant un signal de contrôle (S_{C}) dans lequel un écho (E_{D}) distinct des surfaces du matériau représente un défaut.

2. Appareil selon la revendication 1, caractérisé par le fait que les faisceaux ultrasonores (F) émis par les capteurs (C1 à C8) de chaque paire font entre eux un angle tel que l'énergie transmise dans le matériau soit maximale et le parcours ultrasonore du mode de propagation desdits faisceaux dans le matériau soit minimal.

3. Appareil selon l'une quelconque des revendications précédentes, appliqué au contrôle de pièces en matériau composite comprenant des nappes de fibres unidirectionnelles superposées de façon croisée, de telle sorte que les fibres sont orientées selon quatre directions décalées d'environ 45° les unes par rapport aux autres, caractérisé par le fait que la tête de contrôle (10) porte quatre paires de capteurs ultrasonores (C1 à C8), placés en vis-à-vis tous les 45° sur un même cercle.

4. Appareil selon l'une quelconque des revendications précédentes, caractérisé par le fait que les capteurs (C1 à C8) sont tous identiques et émettent des faisceaux ultrasonores à large bande, dont la fréquence centrale est d'environ 1,5 MHz.

5. Appareil selon l'une quelconque des revendications précédentes, caractérisé par le fait que les moyens de regroupement sont des moyens de sommation (Σ).

6. Appareil selon l'une quelconque des revendications précédentes, caractérisé par le fait que des moyens de compensation de retard des signaux de sortie (s1, s2, ...) sont prévus en amont des moyens de regroupement (Σ).

7. Appareil selon l'une quelconque des revendications précédentes, caractérisé par le fait que des moyens d'ajustage de la base de temps de chacun des signaux de sortie (s1, s2, ...) sont prévus en amont des moyens de regroupement (Σ).

8. Procédé de contrôle non destructif de matériaux pouvant présenter plusieurs phases réparties, caractérisé par le fait qu'il consiste à :
a) placer en face d'une surface (SAV) du matériau (W) à contrôler une tête de contrôle ultrasonore (10) portant au moins une paire de capteurs ultrasonores (C1 à C8) aptes à émettre des faisceaux ultrasonores (F) qui se croisent tous en un même point (P) situé à l'intérieur du matériau, de telle sorte que tous ces faisceaux présentent sensiblement une même incidence (A) par rapport à la surface ;
b) faire émettre des faisceaux ultrasonores (F) simultanément par tous les capteurs ;
c) rendre simultanément tous les capteurs récepteurs, afin que chacun d'entre eux délivre simultanément un signal de sortie (s1, s2, ...) représentatif d'une onde ultrasonore réfléchie par le matériau, à partir des faisceaux ultrasonores précédemment émis par les capteurs ;
d) regrouper tous les signaux de sortie afin d'obtenir un signal de contrôle (S_{C}) dans lequel un écho (E_{D}) distinct des surfaces du matériau représente un défaut ; et
e) renouveler les opérations b) à d) autant de fois que nécessaire, tout en déplaçant la tête de contrôle ultrasonore (10) par rapport au matériau, afin d'effectuer un balayage de cette dernière.

9. Procédé selon la revendication 8, caractérisé par le fait qu'on déplace la tête de contrôle ultrasonore (10) en maintenant la distance (D) séparant cette tête du matériau sensiblement constante, afin d'établir une cartographie des défauts à une profondeur donnée.

10. Procédé selon la revendication 9, caractérisé par le fait qu'on renouvelle les opérations a) à c) pour différentes valeurs de la distance (D) séparant la tête de contrôle ultrasonore (10) du matériau, afin d'établir une cartographie des défauts à différentes profondeurs.

## Patentansprüche

1. Vorrichtung zur zerstörungsfreien Prüfung von Materialien, die mehrere separate Phasen aufweisen können, dadurch gekennzeichnet, daß sie umfaßt:
- einen Ultraschall-Prüfkopf (10) mit mindestens einem Paar Ultraschallsensoren (C1 bis C8), die Ultraschallstrahlenbündel (F) aussenden können, wobei die Sensoren eines und des gleichen Paars an diametral entgegengesetzten Stellen eines Kreises einander gegenüberliegend angeordnet und dergestalt ausgerichtet sind, daß sich alle Längsachsen der Sensoren in einem einzigen Punkt (P) schneiden, wobei der Winkel zwischen der Achse jedes Sensors und der Achse des Prüfkopfs jeweils den gleichen Wert (A) hat;
- Mittel (24), um den Prüfkopf gegenüber einer Oberfläche des zu prüfenden Materials dergestalt zu verschieben, daß alle Ultraschallstrahlenbündel stets im wesentlichen den gleichen Einfallwinkel zu dieser Oberfläche haben und daß der genannte Punkt sich stets im Inneren des Materials befindet;
- Mittel (28), um alle Ultraschallsensoren (C1 bis C8) zugleich zu Sendern und dann zu Empfängern zu machen, so daß jeder der Sensoren zur gleichen Zeit ein Ausgangssignal (s1, s2 usw.) abgibt, das eine von dem Material geflektierte Ultraschallwelle aus zuvor von den Sensoren gesendeten Ultraschallstrahlenbündeln darstellt;
- Mittel zur Umgruppierung ( ) aller Ausgangssignale, wobei ein Kontrollsignal (SC) abgegeben wird, bei dem ein Unterscheidungsecho (ED) der Materialoberflächen einen Fehler anzeigt.

2. Vorrichtung nach Anspruch 1, dadurch gekennzeichnet, daß die von den Sensoren (C1 bis C8) gesendeten Ultraschallstrahlenbündel (F) jedes Paars zueinander einen Winkel dergestalt bilden, daß die in das Material übertragene Energie ein Maximum erreicht und die Ultraschallstrecke des Ausbreitungsmodus der genannten Bündel in dem Material ein Minimum erreicht.

3. Vorrichtung nach einem der vorherigen Ansprüche zur Prüfung von Teilen aus Verbundwerkstoff mit Faserpelz aus Fasern, die in einer Richtung verlaufen und dergestalt quer übereinandergeschichtet sind, daß die Fasern in vier um 45 ° zueinander verschobenen Richtungen ausgerichtet sind, dadurch gekennzeichnet, daß der Prüfkopf (10) vier Paare Ultraschallsensoren (C1 bis C8) trägt, die einander gegenüberliegend im Abstand von 45° auf einem Kreis angeordnet sind.

4. Vorrichtung nach einem der vorherigen Ansprüche, dadurch gekennzeichnet, daß die Sensoren (C1 bis C8) alle identisch sind und Breitband-Ultraschallstrahlenbündel mit einer Bandmittenfrequenz von ca. 1,5 MHz senden.

5. Vorrichtung nach einem der vorherigen Ansprüche, dadurch gekennzeichnet, daß die Umgruppierungsmittel Summierungsmittel ( ) sind.

6. Vorrichtung nach einem der vorherigen Ansprüche, dadurch gekennzeichnet, daß vor den Umgruppierungsmitteln ( ) Mittel zur Kompensation der Verzögerung der Ausgangssignale (s1, s2 usw.) vorgesehen sind.

7. Vorrichtung nach einem der vorherigen Ansprüche, dadurch gekennzeichnet, daß vor den Umgruppierungsmitteln ( ) Mittel zur Einstellung der Zeitbasis jedes der Ausgangssignale (s1, s2 usw.) vorgesehen sind.

8. Verfahren zur zerstörungsfreien Prüfung von Materialien, die mehrere separate Phasen aufweisen können, dadurch gekennzeichnet, daß es darin besteht,
a) gegenüber einer Oberfläche (SAV) des zu prüfenden Materials (W) einen Ultraschall-Prüfkopf (10) zu plazieren, der mindestens ein Paar Ultraschallsensoren (C1 bis C8) trägt, die Ultraschallstrahlenbündel (F) aussenden können, die sich alle in einem einzigen Punkt (P) schneiden, der sich im Inneren des Materials befindet, so daß alle diese Strahlenbündel im wesentlichen den gleichen Einfallwinkel (A) zu der Oberfläche haben;
b) von allen Sensoren zugleich Ultraschallstrahlenbündel (F) aussenden zu lassen;
c) alle Ultraschallsensoren (C1 bis C8) zugleich zu Empfängern zu machen, so daß jeder von ihnen zur gleichen Zeit ein Ausgangssignal (s1, s2 usw.) abgibt, das eine von dem Material geflektierte Ultraschallwelle aus zuvor von den Sensoren gesendeten Ultraschallstrahlenbündeln darstellt;
d) alle Ausgangssignale umzugruppieren, um ein Kontrollsignal (SC) zu erhalten, bei dem ein Unterscheidungsecho der Materialoberflächen einen Fehler anzeigt; und
e) die Schritte b) bis d) so oft wie nötig zu wiederholen, wobei der Ultraschall-Prüfkopf (10) gegenüber dem Material verschoben wird, um die Abtastung des letzteren auszuführen.

9. Verfahren nach Anspruch 8, dadurch gekennzeichnet, daß der Ultraschall-Prüfkopf (10) verschoben wird, wobei der Abstand (D) zwischen diesem Kopf und dem Material im wesentlichen konstant gehalten wird, um eine Kartographie der Fehler in einer gegebenen Tiefe zu erstellen.

10. Verfahren nach Anspruch 9, dadurch gekennzeichnet, daß die Schritte a) bis c) mit verschiedenen Werten für den Abstand (D) zwischen dem Ultraschall-Prüfkopf (10) und dem Material wiederholt werden, um eine Kartographie der Fehler in verschiedenen Tiefen zu erstellen.

## Claims

1. Apparatus for the non-destructive testing of materials which can have several dispersed phases, characterised in that it comprises:
- an ultrasonic testing head (10) carrying at least one pair of ultrasonic sensors (C1 to C8) capable of emitting ultrasonic beams (F), the sensors in the same pair being placed opposite one another at diametrically opposed positions in a circle and being orientated in such a way that the longitudinal axes of each of the sensors all intersect at the same point (P), the angle formed between the axis of each of the sensors and the axis of the testing head having the same value (A);
- means (24) for displacing the testing head opposite a surface of the material to be tested in such a way that all the ultrasonic beams always have substantially the same angle of incidence relative to this surface and said point is always placed within the material;
- means (28) for causing all the ultrasonic sensors (C1 to C8) to emit then receive simultaneously in such a way that each of the sensors simultaneously delivers an output signal (s1, s2, ...) representative of an ultrasonic wave reflected by the material from the ultrasonic beams previously emitted by the sensors;
- means for the collection (Σ) of all the output signals delivering a test signal (S_{c}) in which a distinct echo (E_{D}) from the surfaces of the material represents a defect.

2. Apparatus according to claim 1, characterised in that the ultrasonic beams (F) emitted by the sensors (C1 to C8) of each pair form between themselves an angle which is such that the energy transmitted into the material is at a maximum and the ultrasonic range of the mode of propagation of said beams into the material is at a minimum.

3. Apparatus according to any one of the foregoing claims, applied to the testing of parts made of composite material comprising sheets of unidirectional fibres superimposed in a crossed manner in such a way that the fibres are orientated in four directions offset at about 45° from one another, characterised in that the testing head (10) carries four pairs of ultrasonic sensors (C1 to C8) placed opposite one another every 45° in the same circle.

4. Apparatus according to any one of the preceding claims, characterised in that the sensors (C1 to C8) are all identical and emit wide band ultrasonic beams of which the centre frequency is about 1.5 MHz.

5. Apparatus according to any one of the preceding claims, characterised in that the means of collection are adding means (Σ).

6. Apparatus according to any one of the preceding claims, characterised in that lag compensating means for the output signals (s1, s2, ...) are provided upstream of the collection means (Σ).

7. Apparatus according to any one of the preceding claims, characterised in that means for adjusting the time base of each of the output signals (s1, s2, ...) are provided upstream of the collection means (Σ).

8. Process for the non-destructive testing of materials which can have several dispersed phases, characterised in that it involves:
a) placing, opposite a surface (SAV) of the material (W) to be tested, an ultrasonic testing head (10) carrying at least one pair of ultrasonic sensors (C1 to C8) capable of emitting ultrasonic beams (F) which all intersect at the same point (P) located within the material in such a way that all these beams have substantially the same angle of incidence (A) relative to the surface;
b) causing all sensors to emit ultrasonic beams (F) simultaneously;
c) causing all the sensors to receive simultaneously so that each of them simultaneously delivers an output signal (s1, s2, ...) representative of an ultrasonic wave reflected by the material, from ultrasonic beams previously emitted by the sensors;
d) collecting all the output signals so as to obtain a test signal (S_{c}) in which a distinct echo (E_{D}) from the surfaces of the material represents a defect; and
e) repeating operations b) to d) as many times as necessary while displacing the ultrasonic testing head (10) relative to the material in order to scan it.

9. Process according to claim 8, characterised in that the ultrasonic testing head (10) is displaced while keeping the distance (D) separating this head from the material substantially constant so as to make a map of the defects at a given depth.

10. Process according to claim 9, characterised in that operations a) to c) are repeated for different values of the distance (D) separating the ultrasonic testing head (10) from the material so as to make a map of the defects at different depths.
